# FASCICULE DE BREVET EUROPEEN

(11) **EP 2 903 487 B1**
(45) Date de publication et mention de la délivrance du brevet: **09.11.2016**
(21) Numéro de dépôt: 13782776.2
(22) Date de dépôt: 01.10.2013
(51) Int. Cl.: A47J 27/62, A47J 43/046

(54) **PROCEDE ET APPAREIL ELECTROMENAGER MELANGEUR CHAUFFANT PREVUS POUR LA REALISATION DE SAUCES ET/OU DE PREPARATIONS SUCREES**
VERFAHREN UND BEHEIZBARES HAUSHALTSMISCHGERÄT ZUR ZUBEREITUNG VON SOSSEN UND/ODER GESÜSSTEN SPEISEN
METHOD AND HEATABLE MIXER HOUSEHOLD APPLIANCE DESIGNED FOR PRODUCING SAUCES AND/OR SWEETENED PREPARATIONS

(30) Priorité: 08.10.2012 FR 1259560
(43) Date de publication de la demande: 12.08.2015
(73) Titulaire: SEB S.A., 69130 Ecully (FR)
(72) Inventeur: SICARD, Mariette, 21260 Veronnes (FR); DIRAND, Pascal, 21160 Marsannay La Cote (FR); DUMOUX, Philippe, 21120 Gemeaux (FR)
(74) Mandataire: Cémeli, Eric Philippe Laurent
(86) Numéro de dépôt international: PCT/FR2013/052339
(87) Numéro de publication internationale: WO 2014/057191

(56) Documents cités:
- EP-A1- 0 556 467
- EP-A1- 0 945 773
- DE-A1-102010 000 299
- DE-U1-202012 103 241
- US-A1- 2004 065 211

## Description

La présente invention concerne le domaine technique des appareils électroménagers prévus pour chauffer et homogénéiser des préparations alimentaires en les mélangeant.

La présente invention concerne plus particulièrement les appareils électroménagers mélangeurs chauffants prévus pour la réalisation de sauces ou de préparations sucrées incorporant des oeufs et/ou de l'huile, ainsi que leurs procédés de pilotage.

Il est connu du document EP 0 556 467 un appareil électroménager mélangeur chauffant comportant une pale de remuage disposée dans une cuve agencée sur un socle chauffant. Cet appareil comporte un dispositif de commande comprenant un premier bouton de réglage pour la vitesse de rotation de la pale, un deuxième bouton de réglage pour le temps de chauffe, et un troisième bouton de réglage pour la température de chauffe. Un tel appareil permet de réaliser de nombreuses préparations chaudes, notamment des sauces. Un inconvénient de cet appareil réside toutefois dans la nécessité de suivre précisément le mode d'emploi pour bien réussir les sauces ou les préparations. Un autre inconvénient de cet appareil réside dans la difficulté de réaliser correctement certaines préparations nécessitant d'observer des températures de chauffe précises, sans intervenir au cours de la réalisation de la préparation.

Un but de la présente invention est de proposer un procédé de pilotage d'un appareil électroménager de préparation culinaire mélangeur chauffant pour réaliser des sauces à base d'oeuf ou des préparations sucrées à base d'oeuf, notamment des sauces à base d'oeuf ou des préparations sucrées à base d'oeuf allégées en matières grasses, sans intervention de la part de l'utilisateur après l'introduction des ingrédients et la mise en marche de l'appareil.

Un autre but de la présente invention est de proposer un procédé de pilotage d'un appareil électroménager de préparation culinaire mélangeur chauffant pour réaliser des sauces à base d'huile de haute qualité nutritionnelle, en limitant la dégradation thermique de certains constituants des huiles tels que les oméga 3, sans intervention de la part de l'utilisateur après l'introduction des ingrédients et la mise en marche de l'appareil.

Un autre but de la présente invention est de proposer un appareil électroménager de préparation culinaire mélangeur chauffant permettant de réaliser des sauces à base d'oeuf ou des préparations sucrées à base d'oeuf, notamment des sauces à base d'oeuf ou des préparations sucrées à base d'oeuf allégées en matières grasses, sans intervention de la part de l'utilisateur après l'introduction des ingrédients et la mise en marche de l'appareil.

Un autre but de la présente invention est de proposer un appareil électroménager de préparation culinaire mélangeur chauffant permettant de réaliser des sauces à base d'huile de haute qualité nutritionnelle, en limitant la dégradation thermique de certains constituants des huiles tels que les oméga 3, sans intervention de la part de l'utilisateur après l'introduction des ingrédients et la mise en marche de l'appareil.

Ces buts sont atteints avec un procédé de pilotage d'un appareil électroménager de préparation culinaire mélangeur chauffant pour lier une préparation culinaire à base d'oeuf et/ou d'huile, ledit appareil électroménager de préparation culinaire mélangeur chauffant comportant une pale de remuage entraînée en rotation dans une cuve reposant sur un siège chauffant comprenant des moyens de chauffe associés à un dispositif de contrôle de température venant en contact avec la cuve, du fait que :
- dans une première phase de chauffe les moyens de chauffe sont alimentés indépendamment de la température mesurée par le dispositif de contrôle de température, tant que la température mesurée par le dispositif de contrôle de température reste inférieure à un premier seuil de transition de chauffe,
- les moyens de chauffe sont réalimentés pour une deuxième phase de chauffe temporaire lorsque la température mesurée par le dispositif de contrôle de température descend en dessous d'un deuxième seuil de commande de chauffe,
- les moyens de chauffe sont réalimentés pour une troisième phase de chauffe temporaire lorsque la température mesurée par le dispositif de contrôle de température descend en dessous d'un troisième seuil de commande de chauffe supérieur au deuxième seuil de commande de chauffe.

La deuxième et la troisième phase de chauffe temporaire doivent être comprises comme des phases de chauffe dont la durée est limitée, cette durée pouvant être prédéterminée, éventuellement réglable par l'utilisateur, ou être déterminée par au moins une mesure de température détectant un franchissement de seuil à la hausse. Si désiré, les moyens de chauffe peuvent être réalimentés pour au moins une autre phase ultérieure de chauffe temporaire après la troisième phase de chauffe temporaire. En d'autres termes, les moyens de chauffe sont réalimentés pour au moins deux phases ultérieures de chauffe temporaire après que la température mesurée par le dispositif de contrôle de température ait atteint un pic provoqué par la phase de chauffe précédente, le troisième seuil de commande de chauffe étant supérieur au deuxième seuil de commande de chauffe. Ces dispositions permettent d'obtenir une élévation graduelle de la température de la préparation culinaire, après une première phase de chauffe pour monter en température plus rapidement, en réalisant des paliers de chauffe d'amplitude mieux contrôlée. Ainsi après la première phase de chauffe, la vitesse moyenne d'élévation de la température de la préparation peut être notoirement réduite, ce qui permet de mieux contrôler la transformation de la préparation.

Pour les préparations culinaires à base d'oeuf, telles que la sauce hollandaise ou la crème anglaise, une homogénéisation satisfaisante de la préparation culinaire peut être obtenue sans rallonger inutilement la durée de réalisation. En effet, lorsque la chauffe est trop rapide, des particules d'oeuf isolées peuvent coaguler, ce qui rend la sauce ou la crème dessert inhommogène. Au contraire, si la vitesse de chauffe est suffisamment réduite, la montée en température plus lente permet d'éviter un tel phénomène, même avec des quantités réduites de matière grasse.

Pour les préparations culinaires à base d'huile réputée fragile, telle que l'huile de noix ou l'huile de colza, une meilleure préservation des propriétés organoleptiques et nutritionnelles peut être envisagée, en évitant la surchauffe, sans rallonger inutilement la durée de réalisation. L'utilisation de ces huiles présentant des qualités nutritionnelles intéressantes du fait de leur teneur en acides gras polyinsaturés omega 3 peut ainsi être envisagée pour la réalisation de sauces allégées, par substitution au beurre. A fortiori, d'autres huiles pour assaisonnement et friture peuvent être utilisées.

Le contrôle de température proposé diffère ainsi d'une régulation usuelle par thermostat, avec laquelle la première coupure de température intervient à une température plus élevée, sauf à régler manuellement le thermostat au cours de la réalisation de la préparation culinaire. Si désiré, au moins une autre phase de chauffe peut être envisagée après la troisième phase de chauffe.

Avantageusement, le deuxième seuil de commande de chauffe est inférieur au premier seuil de transition de chauffe. Cette disposition permet de mieux contrôler la remontée en température et de diminuer la vitesse moyenne de chauffe, ce qui favorise la prévention de la formation de grumeaux.

Selon un mode de réalisation avantageux, la deuxième phase de chauffe temporaire et/ou la troisième phase de chauffe temporaire présente(nt) une durée déterminée. Lorsque la vitesse de montée en température est moins importante, la dispersion des moyens de contrôle de température rend plus aléatoire la durée de l'apport thermique. L'utilisation de phases de chauffe temporaire de durée déterminée après la première phase de chauffe permet d'éviter de chauffer la préparation culinaire au-delà d'une température susceptible de dégrader ses constituants. En alternative, au moins l'une des phases ultérieures de chauffe temporaire peut être interrompue en fonction d'au moins une mesure de température.

Avantageusement encore, l'alimentation des moyens de chauffe est interrompue lorsque la température mesurée par le dispositif de contrôle de température atteint un seuil de température de coupure supérieur au troisième seuil de commande de chauffe. Cette disposition permet d'éviter de chauffer la préparation culinaire au-delà d'une température susceptible de dégrader ses constituants.

Avantageusement encore, la durée d'interruption de l'alimentation des moyens de chauffe après la première phase de chauffe est supérieure à la durée d'alimentation des moyens de chauffe lors de la deuxième phase de chauffe temporaire. Cette disposition permet d'obtenir une vitesse moyenne de montée en température dans la préparation culinaire lors de la deuxième phase de chauffe temporaire au moins deux fois moins élevée que la vitesse moyenne de montée en température dans la préparation culinaire lors de la première phase de chauffe.

Avantageusement encore, la durée d'interruption de l'alimentation des moyens de chauffe après la deuxième phase de chauffe temporaire est supérieure à la durée d'alimentation des moyens de chauffe lors de la troisième phase de chauffe temporaire. Cette disposition permet d'obtenir une vitesse moyenne de montée en température dans la préparation culinaire lors de la troisième phase de chauffe temporaire au moins deux fois moins élevée que la vitesse moyenne de montée en température dans la préparation culinaire lors de la première phase de chauffe.

Selon une disposition avantageuse, la pale est entrainée en rotation au moins pendant la première moitié de la durée de la première phase de chauffe. Cette disposition permet d'homogénéiser les ingrédients et leur température dès le démarrage du programme de chauffe. Notamment pour les préparations à base d'oeuf cette disposition permet d'émulsifier le jaune d'oeuf avec les autres ingrédients, ce qui permet d'éviter les dépôts par décantation au fond de la cuve.

Selon une autre disposition avantageuse la pale est entrainée en rotation au moins dès la fin de la première phase de chauffe. Cette disposition permet de bien homogénéiser les ingrédients et leur température dans la période critique de chauffe pour les préparations à l'oeuf, pour éviter que du blanc d'oeuf insuffisamment mélangé ou dispersé coagule.

Selon une disposition préférée, la pale est entrainée en rotation pendant toute la réalisation de la préparation culinaire. Cette disposition permet de favoriser l'obtention d'une préparation culinaire bien homogène.

Avantageusement encore, la pale est entrainée en rotation à une ou plusieurs vitesses de rotation comprise(s) entre 40 et 150 tr/min, et de préférence comprise(s) entre 50 et 100 tr/min, notamment lors de la première moitié de la première phase de chauffe et/ou dès la fin de la première phase de chauffe. Cette disposition permet d'éviter les phénomènes de cavitation susceptibles de favoriser une chauffe inhomogène et/ou une oxydation de la préparation culinaire, ainsi que les phénomènes de surchauffe localisée dûs à un remuage insuffisant.

Avantageusement encore, l'alimentation des moyens de chauffe est interrompue après une durée déterminée. Cette disposition permet de proposer un programme de réalisation adapté à la préparation culinaire souhaitée. Si désiré cette durée déterminée peut être ajustable par l'utilisateur.

Avantageusement encore, l'alimentation des moyens de chauffe utilise un seuil de température de maintien au chaud inférieur au deuxième seuil de commande de chauffe, après la troisième phase de chauffe temporaire, et les moyens de chauffe sont réalimentés pour une période de maintien au chaud chaque fois que la température mesurée par le dispositif de contrôle de température descend en dessous du seuil de température de maintien au chaud. Cette disposition permet de maintenir au chaud la préparation culinaire obtenue, sans la surcuire.

Ces buts sont atteints également avec un appareil électroménager de préparation culinaire mélangeur chauffant comportant une pale de remuage entraînée en rotation dans une cuve reposant sur un siège chauffant comprenant des moyens de chauffe associés à un dispositif de contrôle de température venant en contact avec la cuve, du fait que ledit appareil comporte un dispositif de commande comprenant au moins un programme de fonctionnement selon le procédé précité. Ainsi le premier seuil de transition de chauffe, le deuxième seuil de commande de chauffe et le troisième seuil de commande de chauffe sont déterminés par le programme de fonctionnement. L'utilisateur n'a pas à intervenir pour régler la chauffe de l'appareil lors de la réalisation de la préparation.

Avantageusement, le dispositif de commande comprend plusieurs programmes de fonctionnement selon le procédé précité, par exemple pour préparer différentes sauces ou crèmes dessert. En complément ou en alternative, le dispositif de commande peut comprendre au moins un autre programme de fonctionnement, par exemple pour réaliser une sauce au chocolat ou une sauce au vin.

Avantageusement alors, le premier seuil de transition de chauffe et/ou le deuxième seuil de commande de chauffe et/ou le troisième seuil de commande de chauffe est ajustable. Ces dispositions permettent d'optimiser le réglage de la chauffe, si nécessaire.

Avantageusement alors, l'alimentation des moyens de chauffe est interrompue après une durée déterminée par ledit programme de fonctionnement et le dispositif de commande comporte des moyens de réglage de ladite durée déterminée.

Selon un mode de réalisation, l'appareil électroménager de préparation culinaire chauffant comporte une embase présentant le siège chauffant recevant la cuve amovible, l'embase logeant un moteur électrique entraînant la pale par un axe d'entraînement traversant le siège chauffant.

Selon une forme de réalisation avantageuse, la cuve comporte un fond diffuseur inférieur reposant sur le siège chauffant, et le dispositif de contrôle de température comporte un capteur de température venant en contact avec le fond diffuseur inférieur de la cuve. Cette disposition permet de limiter la formation de points chauds dans le fond de la cuve.

L'invention sera mieux comprise à l'étude d'un exemple de réalisation, pris à titre nullement limitatif, illustré dans les figures annexées, dans lesquelles :
- la figure 1 est une vue en perspective d'un appareil de préparation culinaire chauffant utilisant le procédé de pilotage selon l'invention,
- la figure 2 est une vue en perspective de la base de l'appareil illustré sur la figure 1, portant une cuve et une pale représentée en coupe verticale,
- la figure 3 est une vue partielle en coupe de la base de l'appareil illustrée sur les figures 1 et 2, montrant le siège chauffant ainsi que le dispositif d'entraînement,
- la figure 4 est une vue de dessus en perspective du siège chauffant de la base de l'appareil illustrée sur les figures 1 à 3,
- la figure 5 est une vue en coupe de la partie inférieure de la cuve illustrée sur les figures 1 et 2,
- la figure 6 est une vue en perspective de l'organe d'entraînement supérieur agencé à l'intérieur de la cuve illustrée sur les figures 1, 2 et 5,
- la figure 7 est une vue partielle en perspective de dessous de la pale illustrée sur les figures 1 et 2, montrant les conformations d'entraînement,
- la figure 8 est une vue en élévation de la pale illustrée sur les figures 1, 2 et 7,
- la figure 9 est une vue de dessus de la pale illustrée sur les figures 1, 2, 7 et 8,
- la figure 10 illustre la pale représentée sur les figures 1, 2, 7, 8 et 9 agencée dans la cuve illustrée sur les figures 1, 2, 5 et 6,
- la figure 11 illustre la cuve représentée sur les figures 1, 2, 5 et 10 en position renversée montrant le fond diffuseur inférieur.
- la figure 12 illustre la face inférieure de la platine en aluminium du siège chauffant représenté sur les figures 2, 3 et 4.
- la figure 13 est une vue en élévation et en coupe partielle de la cuve disposée sur le siège chauffant.
- la figure 14 illustre les courbes de température mesurées pour un capteur de température pour trois programmes de chauffe différents utilisant le procédé de pilotage selon l'invention,
- la figure 15 illustre les courbes de température pour un programme de réalisation de sauce hollandaise,
- la figure 16 illustre les courbes de température pour un programme de réalisation de crème anglaise,
- la figure 17 illustre les courbes de température pour un programme de réalisation de sauce à l'huile.

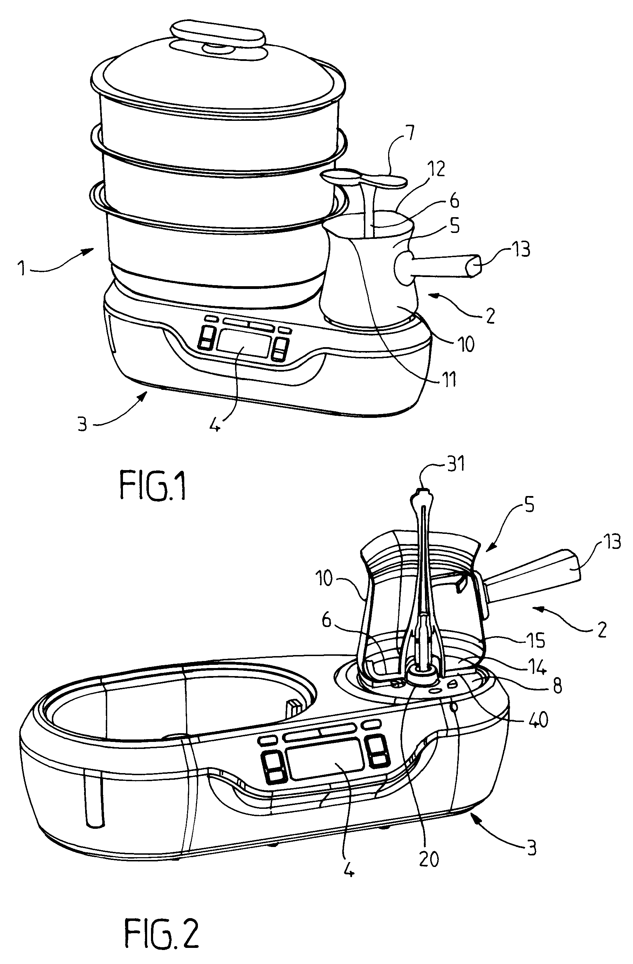

L'appareil électroménager de préparation culinaire mélangeur chauffant illustré sur la figure 1 comporte à titre d'exemple une partie cuiseur vapeur 1 et une partie saucier 2, avec une embase 3 commune présentant un dispositif de commande 4.

La figure 2 montre plus particulièrement la partie saucier 2 disposée sur l'embase 3. L'appareil électroménager de préparation culinaire mélangeur chauffant comporte un siège chauffant 20 recevant une cuve 5 amovible. Le siège chauffant 20 est porté par l'embase 3. La cuve 5 repose sur le siège chauffant 20.

L'appareil électroménager de préparation culinaire mélangeur chauffant comporte une pale 6 de remuage entraînée en rotation dans la cuve 5 reposant sur le siège chauffant 20. Si désiré, la rotation de la pale 6 peut être séquentielle et/ou à vitesse variable.

La pale 6 est de préférence guidée en rotation dans la cuve 5. La pale 6 comporte une extrémité supérieure 60 formant un support prévu pour porter une cuiller 7, visible sur la figure 1.

Dans l'exemple de réalisation illustré sur les figures, l'embase 3 forme une base motorisée 8 prévue pour entrainer en rotation la pale 6 agencée dans la cuve 5. Ainsi l'appareil électroménager de préparation culinaire mélangeur chauffant comporte l'embase 3 présentant le siège chauffant 20 recevant la cuve 5 amovible. L'embase 3 loge un moteur électrique 27 entraînant la pale 6 par un axe d'entraînement 26 traversant le siège chauffant 20.

La cuve 5 comporte un corps 10 présentant un bec verseur 11 et un autre bec verseur 12 agencé à l'opposé du bec verseur 11. Une poignée 13 est montée sur le corps 10. La poignée 13 est agencée entre le bec verseur 11 et l'autre bec verseur 12. La cuve 5 présente un fond 14 et une paroi latérale 15.

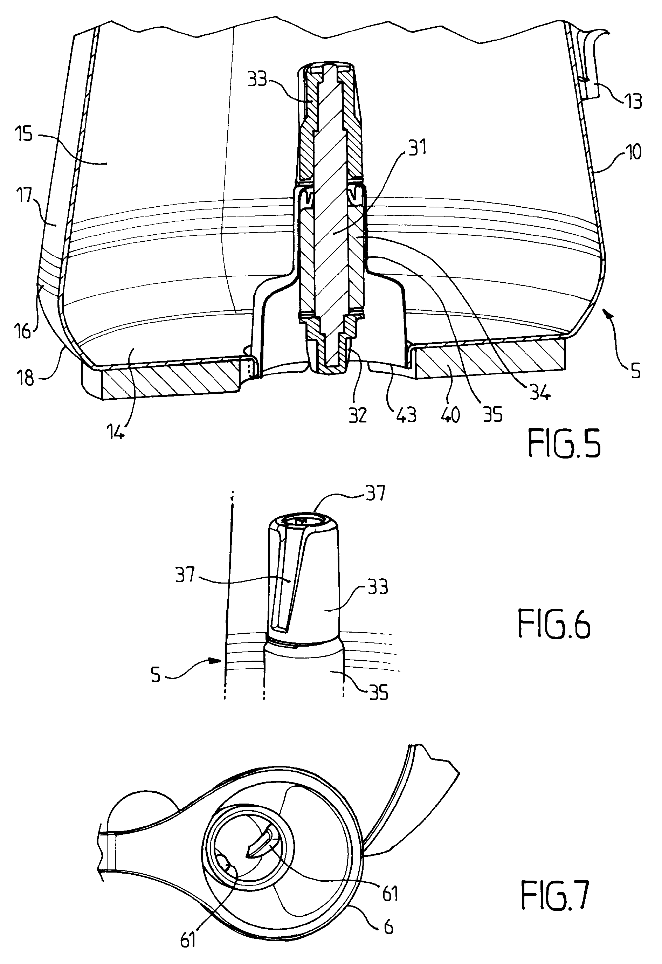

Tel que mieux visible sur la figure 5, la paroi latérale 15 de la cuve 5 présente un renflement annulaire 16. Le renflement annulaire 16 présente avantageusement une partie supérieure 17 inclinée entre 1 et 5° et de préférence entre 2 et 4° vers l'intérieur de la cuve 5 par rapport à l'axe de rotation de la pale 6, et une partie inférieure 18 raccordée avec le fond 14.

La cuve 5 repose sur le siège chauffant 20. Tel que visible sur la figure 2, la cuve 5 comporte un fond diffuseur inférieur 40 reposant sur le siège chauffant 20.

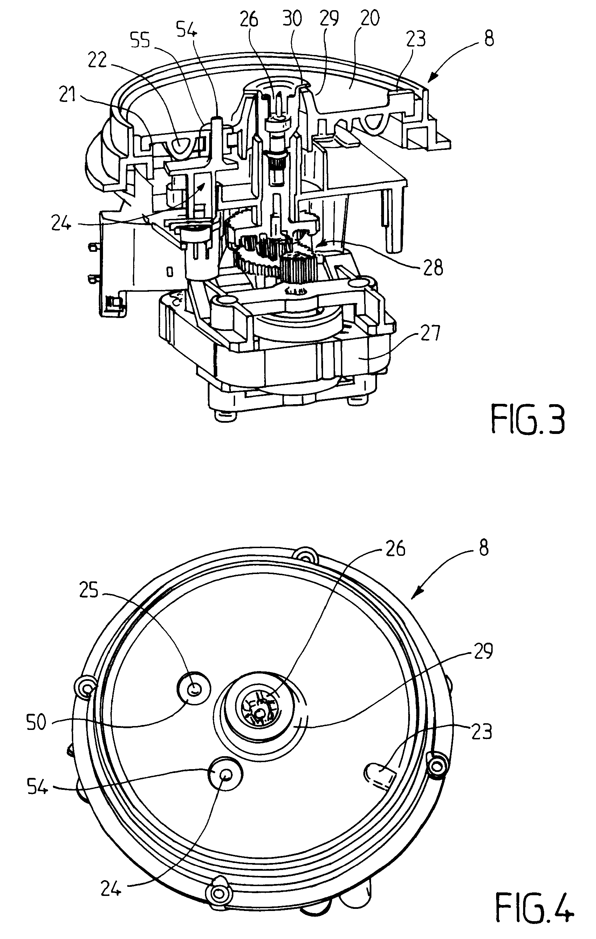

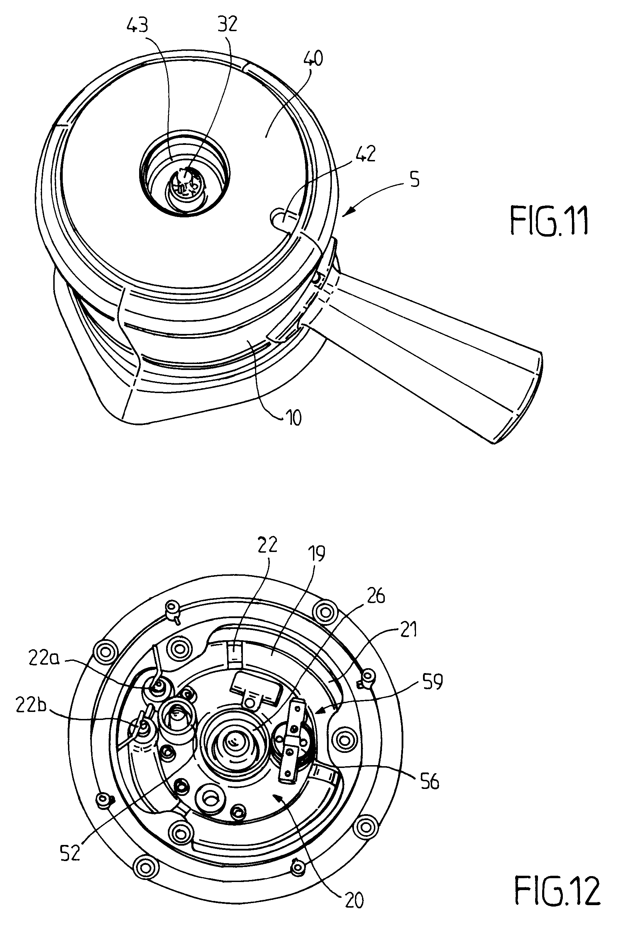

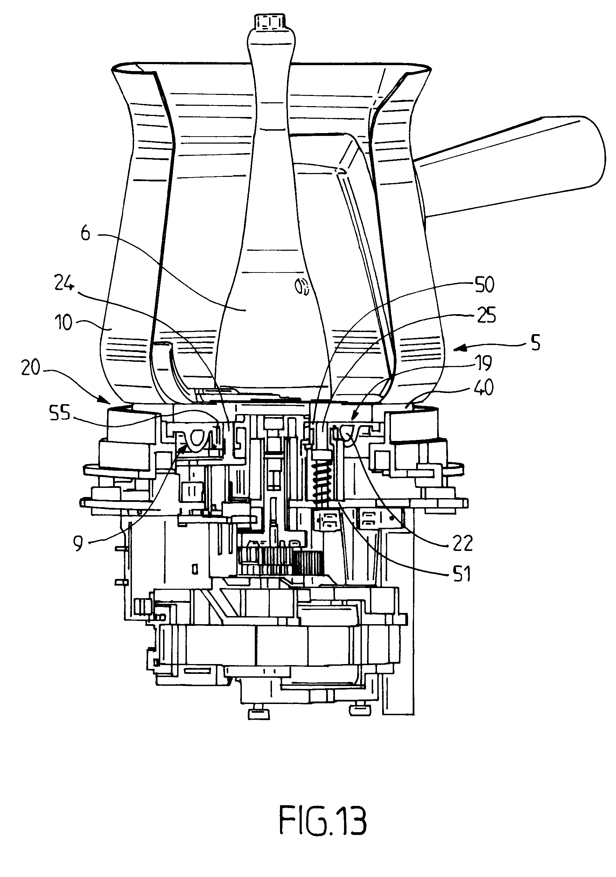

L'appareil électroménager de préparation culinaire mélangeur chauffant comporte un dispositif de contrôle de température 9, prévu pour contrôler la température de la cuve 5. Le siège chauffant 20 comprend des moyens de chauffe 19 associés au dispositif de contrôle de température 9 venant en contact avec la cuve 5. Selon le mode de réalisation préféré illustré sur les figures, le siège chauffant 20 est constitué par une platine en aluminium 21 associée à des moyens de chauffe 19, tel que visible sur les figures 12 et 13. Avantageusement les moyens de chauffe 19 comprennent un élément chauffant blindé 22. Tel que mieux visible sur la figure 3, la platine en aluminium 21 est surmoulée sur l'élément chauffant blindé 22. En alternative, l'élément chauffant blindé 22 pourrait notamment être brasé sous la platine en aluminium 21.

L'embase 3 comporte un organe de détection de présence 24 de la cuve 5. L'organe de détection de présence 24 comprend une tige mobile 54 actionnant un micro-switch (non représenté sur les figures). Tel que visible sur la figure 3, la tige mobile 54 est montée à travers le siège chauffant 20 dans un joint 55 afin d'assurer une étanchéité en cas de débordement. La cuve 5 en place sur le siège chauffant 20 repousse la tige mobile 54 et actionne l'organe de détection de présence 24.

Le dispositif de contrôle de température 9 comporte un capteur de température 25 venant en contact avec la cuve 5. Plus particulièrement dans l'exemple de réalisation illustré sur les figures, le capteur de température 25 vient en contact avec le fond diffuseur inférieur 40 de la cuve 5. Le capteur de température 25 est monté mobile contre un moyen de rappel élastique 51 dans une ouverture 52 traversant le siège chauffant 20. Le capteur de température 25 est monté à travers le siège chauffant 20 dans un joint 50 afin d'assurer une étanchéité en cas de débordement et une isolation thermique. Le joint 50 est par exemple formé par une gaine en silicone. Le moyen de rappel élastique 51 est formé par exemple par un ressort hélicoïdal, tel que visible sur la figure 13. Le capteur de température 25 vient en contact avec la cuve 5 disposée sur le siège chauffant 20. Le capteur de température 25 permet de capter directement la température de la cuve 5. Le capteur de température 25 est par exemple formé par une résistance CTN. Plus particulièrement, le capteur de température 25 est agencé dans une zone froide du siège chauffant 20 et vient en contact avec le fond diffuseur inférieur 40 de la cuve 5 disposée sur le siège chauffant 20.

Selon un mode de réalisation préféré illustré sur les figures, l'appareil électroménager de préparation culinaire mélangeur chauffant comporte un dispositif de régulation thermique 59, monté en bon contact thermique avec le siège chauffant 20, prévu pour contrôler la température du siège chauffant 20 et limiter les chauffes excessives du siège chauffant 20.

L'axe d'entraînement 26 est entrainé par le moteur 27, si désiré par l'intermédiaire d'un réducteur 28, représenté schématiquement sur la figure 3. L'axe d'entraînement 26 surplombe le siège chauffant 20. Le siège chauffant 20 présente une cheminée 29 dans laquelle est agencé l'axe d'entraînement 26. L'axe d'entraînement 26 présente une collerette 30 s'étendant au dessus de la cheminée 29.

Le siège chauffant 20 présente des moyens de positionnement de la cuve 5. Les moyens de positionnement comprennent avantageusement la collerette 30 de l'axe d'entraînement 26 et la cheminée 29, ainsi qu'une protubérance 23 formée sur le siège chauffant 20. La collerette 30, la cheminée 29 et la protubérance 23 sont prévues pour être engagées dans une conformation centrale du fond de la cuve 5. La protubérance 23 est prévue pour être engagée dans une conformation latérale de la cuve 5.

Dans l'exemple de réalisation illustré sur les figures, la cuve 5 est métallique. Le corps 10 de la cuve 5 est avantageusement réalisé en acier inoxydable. Le corps 10 de la cuve 5 est solidaire d'un fond diffuseur inférieur 40. Le fond diffuseur inférieur 40 comprend au moins un matériau bon conducteur de chaleur tel que l'aluminium ou le cuivre. Le fond diffuseur inférieur 40 est avantageusement réalisé en aluminium. Le fond diffuseur inférieur 40 est fixé sous le corps 10. Le fond diffuseur inférieur 40 peut par exemple être assemblé avec le corps 10 par frappe à chaud ou encore par brasage. De préférence, l'épaisseur du fond diffuseur inférieur 40 est comprise entre 3 et 10 mm. Si nécessaire la face supérieure du siège chauffant 20 et/ou la face du fond diffuseur inférieur 40 reposant sur le siège chauffant 20 peuvent être rectifiées pour améliorer leur planéité. Si désiré la cuve 5 peut être au moins partiellement revêtue sur sa face interne et/ou externe.

Dans le mode de réalisation représenté sur les figures, la pale 6 est entrainée par l'intermédiaire de la cuve 5.

Tel que mieux visible sur la figure 5, la cuve 5 porte un axe entraîneur 31 présentant un organe d'entraînement inférieur 32 prévu pour être entrainé en rotation par la base motorisée 8 et un organe d'entraînement supérieur 33 prévu pour entrainer en rotation la pale 6. L'axe entraîneur 31 est monté dans un palier 34 logé dans une partie tubulaire 35 montée dans une ouverture du fond 14. Un joint d'étanchéité est monté sur le palier 34 autour de l'axe entraineur 31. Le fond diffuseur inférieur 40 présente une forme annulaire ménageant un passage central 43 laissant accessible l'organe d'entraînement inférieur 32.

Tel que que mieux visible sur la figure 6, l'organe d'entraînement supérieur 33 présente des conformations hélicoïdales 37. Tel que montré sur la figure 7, la pale 6 présente des conformations hélicoïdales associées 61 prévues pour venir en prise avec les conformations hélicoïdales 37 de l'organe d'entraînement supérieur 33 lorsque la pale 6 est mise en place dans la cuve 5 et pour plaquer la pale 6 par rapport au fond 14 de la cuve 5 lorsque la pale 6 est entraînée en rotation.

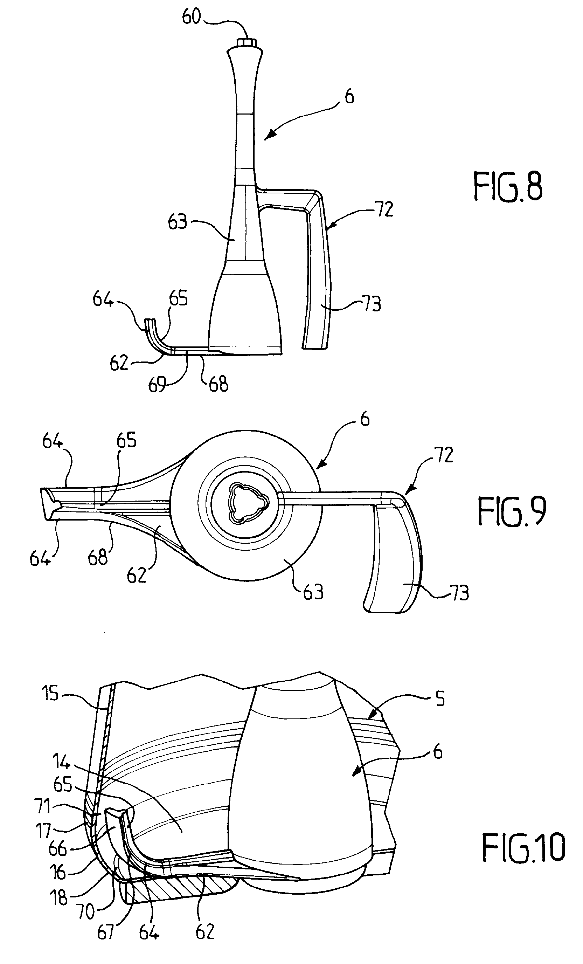

Tel que que mieux visible sur la figure 8, la pale 6 présente un bras inférieur 62 s'étendant à partir de la partie inférieure d'un moyeu 63. Le bras inférieur 62 comporte une extrémité relevée 64. Tel que mieux visible sur la figure 9, le bras inférieur 62 présente une nervure supérieure de rigidification 65. Plus particulièrement, la nervure supérieure de rigidification 65 est issue du moyeu 63 et s'étend jusqu'à l'extrémité relevée 64 du bras inférieur 62. La nervure supérieure de rigidification 65 atteint la partie terminale de l'extrémité relevée 64 du bras inférieur 62. Tel que visible sur les figures 2 et 10, le bras inférieur 62 s'étend au dessus du fond 14 de la cuve 5. L'extrémité relevée 64 du bras inférieur 62 ménage un passage périphérique 70 avec la paroi latérale 15 de la cuve 5. Le passage périphérique 70 présente une restriction supérieure 71. L'extrémité relevée 64 du bras inférieur 62 s'élève au dessus de la section maximale du renflement annulaire 16 de la paroi latérale 15 de la cuve 5. L'extrémité relevée 64 du bras inférieur 62 présente une face extérieure 66 se rapprochant de la paroi latérale 15 de la cuve 5 à partir d'un bord latéral d'attaque 67. Avantageusement, le bras inférieur 62 ménage au moins un passage inférieur avec le fond 14 de la cuve 5. De plus le bras inférieur 62 présente une face inférieure 68 se rapprochant du fond 14 de la cuve 5 à partir d'un bord inférieur d'attaque 69. La face inférieure 68 est prolongée par la face extérieure 66 et le bord inférieur d'attaque 69 est prolongé par le bord latéral d'attaque 67.

La pale 6 comporte un bras supérieur 72 s'étendant à partir de la partie médiane du moyeu 63. Le bras supérieur 72 présente une extrémité plongeante 73 inclinée vers l'arrière par rapport au sens de rotation de la pale 6 dans la cuve 5. Le bras supérieur 72 plonge dans la cuve 5 et s'étend à distance de la paroi latérale 15 de la cuve 5. Le bras supérieur 72 est rattaché horizontalement sur le moyeu 63 de la pale 6 pour dégager cette zone et ainsi éviter des formations de blocs dans le cas de la sauce au chocolat.

La pale 6 est de préférence réalisée en matériau rigide. La pale 6 est avantageusement réalisée en matière plastique rigide, telle que notamment en PBT.

La figure 11 montre la face inférieure de la cuve 5. Le passage central 43 est prévu pour loger la collerette 30 et la cheminée 29 lorsque la cuve 5 est en place sur le siège chauffant 20. Par ailleurs, une conformation concave 42 ménagée dans le fond diffuseur inférieur 40 est prévue pour loger la protubérance 23 lorsque la cuve 5 repose sur le siège chauffant 20. La conformation concave 42 est avantageusement positionnée en bordure latérale du fond diffuseur inférieur 40, pour favoriser une répartition homogène de température dans le fond diffuseur inférieur 40.

La figure 12 montre la face inférieure du siège chauffant 20. L'élément chauffant blindé 22 forme un anneau ouvert. Plus particulièrement, l'élément chauffant blindé 22 comporte deux extrémités 22a, 22b rapprochées. L'élément chauffant blindé 22 entoure au moins partiellement l'axe d'entraînement 26. L'ouverture 52 prévue pour le passage du capteur de température 25 (non représenté sur la figure 12) est agencée à proximité des extrémités 22a, 22b de l'élément chauffant blindé 22. Ainsi le capteur de température 25 est agencé dans une zone froide du siège chauffant 20. Plus particulièrement, l'ouverture 52 est agencée entre les extrémités 22a, 22b de l'élément chauffant blindé 22 et le centre du siège chauffant 20.

Le dispositif de régulation thermique 59 monté en bon contact thermique avec le siège chauffant 20 est avantageusement formé par un thermostat 56, tel que visible sur la figure 12. Le thermostat 56 est agencé entre l'élément chauffant blindé 22 et le centre du siège chauffant 20. En alternative le dispositif de régulation thermique 59 pourrait notamment comprendre un autre capteur de température disposé de préférence à proximité des moyens de chauffe, pour réduire l'amplitude de température du siège chauffant 20 entre les coupures des moyens de chauffe et leur réalimentation.

La figure 13 montre la cuve 5 en place sur le siège chauffant 20. Le fond diffuseur inférieur 40 repose sur le siège chauffant 20 et repousse le capteur de température 25 contre le moyen de rappel élastique 51.

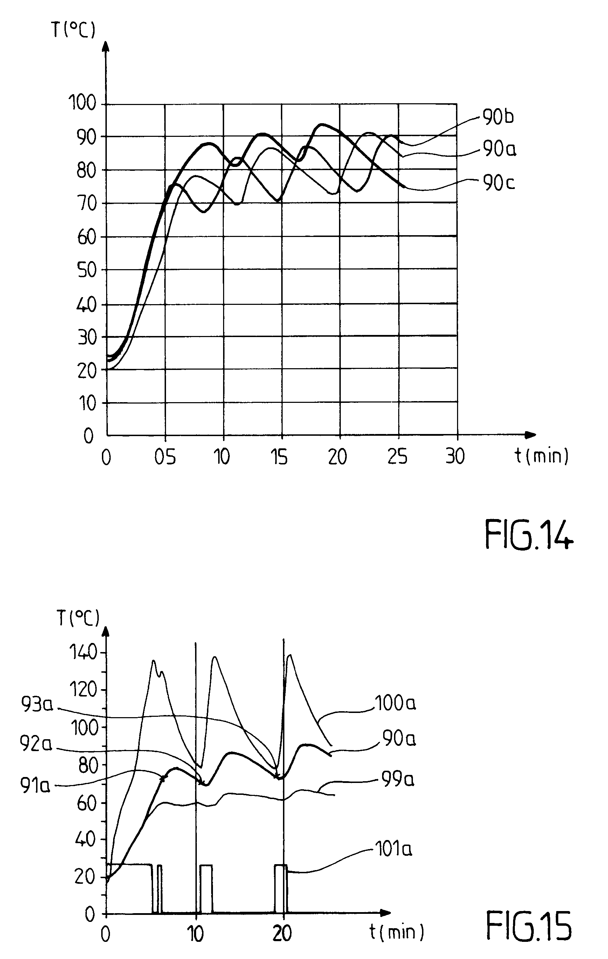

Le dispositif de commande 4 comporte au moins un programme de fonctionnement contrôlant l'alimentation des moyens de chauffe 19. La figure 14 illustre trois courbes de température de cuve 90a, 90b, 90c mesurées par le capteur de température 25, correspondant respectivement à un programme de réalisation de sauce hollandaise, à un programme de réalisation de crème anglaise, et à un programme de réalisation de sauce à l'huile, adapté à l'utilisation d'huiles déconseillées pour la friture.

Les figures 15, 16 et 17 illustrent, respectivement pour le programme de réalisation de sauce hollandaise, pour le programme de réalisation de crème anglaise, et pour le programme de réalisation de sauce à l'huile, les courbes de température de cuve 90a, 90b, 90c mesurées par le capteur de température 25, des courbes de température de siège chauffant 100a, 100b, 100c mesurées par le thermostat 56, des courbes de puissance 101 a, 101b, 101 c pour les moyens de chauffe 19, ainsi que des températures d'ingrédients 99a, 99b, 99c mesurées dans la préparation contenue par la cuve 5.

Le programme de réalisation de sauce hollandaise, le programme de réalisation de crème anglaise, et le programme de réalisation de sauce à l'huile mettent en oeuvre un procédé de pilotage d'un appareil électroménager de préparation culinaire mélangeur chauffant pour lier une préparation culinaire à base d'oeuf et/ou d'huile, dans lequel :
- dans une première phase de chauffe les moyens de chauffe 19 sont alimentés indépendamment de la température mesurée par le dispositif de contrôle de température 9, tant que la température mesurée par le dispositif de contrôle de température 9 reste inférieure à un premier seuil de transition de chauffe 91 a, 91 b, 91 c,
- les moyens de chauffe 19 sont réalimentés pour une deuxième phase de chauffe temporaire lorsque la température mesurée par le dispositif de contrôle de température 9 descend en dessous d'un deuxième seuil de commande de chauffe 92a, 92b, 92c,
- les moyens de chauffe 19 sont réalimentés pour une troisième phase de chauffe temporaire lorsque la température mesurée par le dispositif de contrôle de température 9 descend en dessous d'un troisième seuil de commande de chauffe 93a, 93b, 93c supérieur au deuxième seuil de commande de chauffe 92a, 92b, 92c.

Le dispositif de commande 4 comprend ainsi au moins un programme de fonctionnement selon le procédé précité.

Selon une forme de réalisation, le premier seuil de transition de chauffe 91 a, 91 b, 91 c, le deuxième seuil de commande de chauffe 92a, 92b, 92c et le troisième seuil de commande de chauffe 93a, 93b, 93c sont pré-déterminés lors du choix du programme. Si désiré, le premier seuil de transition de chauffe et/ou le deuxième seuil de commande de chauffe et/ou le troisième seuil de commande de chauffe peuvent être ajustables, pour un ou plusieurs des programmes. Dans les programmes de fonctionnement illustrés sur les figures 15, 16 et 17, le deuxième seuil de commande de chauffe 92a, 92b, 92c est inférieur au premier seuil de transition de chauffe 91 a, 91 b, 91 c.

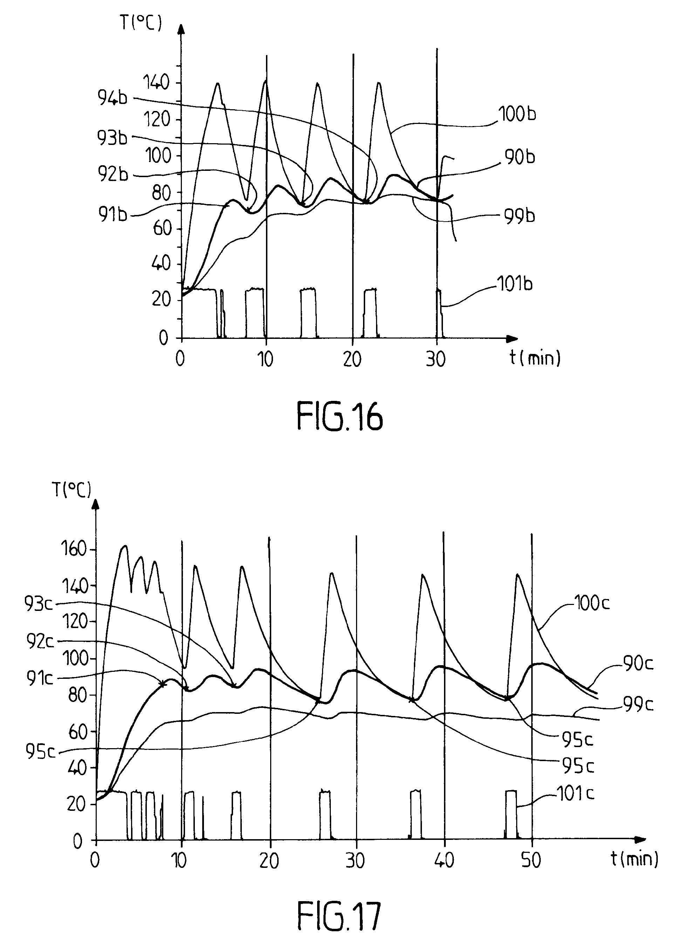

Si désiré les moyens de chauffe 19 peuvent être réalimentés pour au moins une autre phase de chauffe temporaire après la troisième phase de chauffe temporaire. Tel que visible sur la figure 16, un quatrième seuil de commande de chauffe 94b est supérieur au troisième seuil de commande de chauffe 93b.

Dans les programmes de fonctionnement illustrés sur les figures 15, 16 et 17, la deuxième phase de chauffe temporaire et la troisième phase de chauffe temporaire présentent une durée déterminée, par exemple de l'ordre de 30s. A titre de variante, au moins l'une des phases de chauffe temporaires pourrait être interrompue en fonction d'une mesure de température.

La durée d'interruption de l'alimentation des moyens de chauffe 19 après la première phase de chauffe est supérieure à la durée d'alimentation des moyens de chauffe 19 lors de la deuxième phase de chauffe temporaire. La durée d'interruption de l'alimentation des moyens de chauffe 19 après la deuxième phase de chauffe temporaire est supérieure à la durée d'alimentation des moyens de chauffe 19 lors de la troisième phase de chauffe temporaire. Ainsi la puissance moyenne de chauffe est réduite d'au moins 50% après la première phase de chauffe, et de préférence d'au moins 65%.

Tel que visible sur les figures 15, 16 et 17, les courbes de température de siège chauffant 100a, 100b, 100c présentent dans la première phase de chauffe une ou plusieurs portions où la température descend après un pic de température. Cet effet est dû à l'action du dispositif de régulation thermique 59, le thermostat 56 interrompant l'alimentation des moyens de chauffe 19 lorsque la température mesurée dépasse un seuil haut de consigne de régulation, les moyens de chauffe 19 étant réalimentés lorsque la température mesurée repasse en dessous d'un seuil bas de consigne de régulation. Cette régulation peut être corrélée aux courbes de puissance 101 a, 101b, 101 c pour les moyens de chauffe 19 présentant une ou plusieurs interruptions avant que les courbes de température de cuve 90a, 90b, 90c atteignent le premier seuil de transition de chauffe 91 a, 91 b, 91 c.

Si désiré, pour éviter une surchauffe de la préparation, l'alimentation des moyens de chauffe 19 peut être interrompue lorsque la température mesurée par le dispositif de contrôle de température 9 atteint un seuil de température de coupure supérieur au troisième seuil de commande de chauffe 93a, 93b, 93c.

Si désiré, l'alimentation des moyens de chauffe 19 est interrompue après une durée déterminée par le programme de fonctionnement choisi, cette durée étant par exemple comprise entre 20 et 30 min (20 min pour les sauces à base d'huile, 25 min pour la sauce hollandaise, 30 min pour la crème anglaise). Selon une forme de réalisation préférée, cette durée déterminée peut être ajustée par l'utilisateur, par exemple pour préparer une quantité plus ou moins importante de préparation. Ainsi le dispositif de commande 4 comporte alors des moyens de réglage de ladite durée déterminée.

Si désiré le ou au moins un programme de fonctionnement peut comporter une phase de maintien au chaud. Tel que visible sur la figure 17, l'alimentation des moyens de chauffe 19 utilise un seuil de température de maintien au chaud 95c inférieur au deuxième seuil de commande de chauffe 92c, après la troisième phase de chauffe, les moyens de chauffe 19 étant réalimentés pour une période de maintien au chaud chaque fois que la température mesurée par le dispositif de contrôle de température 9 descend en dessous du seuil de température de maintien au chaud 95c, tel que représenté par la courbe de puissance 101 c et la courbe de température de cuve 90c.

Dans les programmes de fonctionnement illustrés sur les figures 15, 16 et 17, la pale 6 est entrainée en rotation pendant toute la réalisation de la préparation culinaire. Selon une configuration avantageuse, la pale 6 est entrainée en rotation à une ou plusieurs vitesses de rotation comprise(s) entre 40 et 150 tr/min, et de préférence comprise(s) entre 50 et 100 tr/min. Une gamme de vitesses préférées pour la pale 6 s'étend entre 60 et 90 tr/min. La pale 6 est par exemple entraînée en rotation à 80 tr/min.

A titre de variante, la pale 6 peut notamment être entrainée en rotation au moins pendant la première moitié de la durée de la première phase de chauffe, pour bien disperser les ingrédients dès le début du programme, et/ou être entrainée en rotation au moins dès la fin de la première phase de chauffe, pour éviter la formation de grumeaux dans les zones les plus chaudes de préparations contenant de l'oeuf, de préférence dans les gammes de vitesses précitées. Si désiré, plusieurs vitesses de remuage différentes peuvent être utilisées.

L'appareil électrique de cuisson selon l'invention fonctionne et s'utilise de la manière suivante.

L'utilisateur peut mettre tous les ingrédients nécessaires pour la préparation envisagée dans la cuve 5 disposée sur la base motorisée 8 avant de choisir le programme de fonctionnement approprié avec le dispositif de commande 4. Le dispositif de contrôle de température 9 piloté par la température du fond diffuseur inférieur 40 permet d'élever la température de la préparation présente dans la cuve 5, d'abord relativement rapidement dans la première phase de chauffe, puis plus progressivement par paliers ensuite. La pale permet de mélanger et d'homogéneiser les ingrédients, en réduisant les écarts de températures à l'intérieur de la préparation. Le bras inférieur 62 permet de remuer la zone inférieure de la cuve 5. Le bras supérieur 72 en forme de spatule permet de créer un tourbillon pour mélanger les ingrédients restés en suspension. Les ingrédients disposés dans la cuve 5 sont ainsi progressivement homogénéisés. Le dispositif de régulation thermique 59 permet d'éviter les élévations de température excessives du siège chauffant 20. Le fond diffuseur inférieur 40 permet d'obtenir une température bien homogène dans la cuve 5 en évitant les points chauds.

Pour réaliser une sauce aux oeufs tel que la sauce hollandaise et/ou une préparation sucrée aux oeufs telle que la crème anglaise, ces dispositions permettent notamment de réaliser une première phase de chauffe dans laquelle la température de la préparation culinaire contenue dans la cuve 5 avec une vitesse moyenne de montée en température de la préparation culinaire contenue dans la cuve 5 est comprise entre 3 et 10°C/min, la chauffe étant interrompue avant que la température de la préparation culinaire atteigne 65°C, puis reprise pour les deuxième et troisième phase de chauffe temporaire avec une vitesse moyenne de montée en température plus modérée, comprise entre 0,25 et 2,5°C/min, pour épaissir la préparation culinaire en évitant la formation de grumeaux. Ainsi pour réaliser une préparation à base d'oeuf, le premier seuil de transition de chauffe 91 a, 91 b peut être choisi pour que les moyens de chauffe 19 soient alimentés à puissance réduite avant que la température de la préparation culinaire présente dans la cuve 5 atteigne atteigne 65°C, le seuil de température de coupure étant choisi pour que l'alimentation des moyens de chauffe 19 soit interrompue lorsque la température de la préparation culinaire a atteint une valeur comprise entre 78°C et 87°C. Les sauces à base d'oeuf, telles que par exemple sauce hollandaise, carbonara, béarnaise, ainsi que les préparations sucrées à base d'oeuf, telles que la crème anglaise, la crème patissière nécessitent en effet un contrôle précis de la température, pour éviter la formation de grumeaux. Si l'oeuf seul coagule à 65°C, il a été observé que le mélange de l'oeuf avec les autres ingrédients réalisé par la rotation de la pale 6 permet de relever la température de coagulation de l'oeuf. L'alimentation à puissance réduite des moyens de chauffe 19 à partir d'une température limite suffisamment éloignée de la température de coagulation de l'oeuf mélangé aux autres ingrédients, associé au remuage des ingrédients, permet d'homogénéiser et d'épaissir la sauce ou la préparation sucrée, en évitant la formation de grumeaux. Le procédé et l'appareil selon l'invention permettent ainsi de réaliser de manière automatique des sauces aux oeufs et/ou des préparations sucrées aux oeufs après avoir introduit les ingrédients dans la cuve. La réalisation de sauces aux oeufs et/ou de préparations sucrées aux oeufs allégées en matières grasses est également facilitée. L'utilisation de quantités réduites de matière grasses augmente en effet la sensibilité de la coagulation de l'oeuf.

Pour réaliser une préparation à base d'huile réputée sensible à la température, telle que l'huile de noix ou l'huile de colza, le premier seuil de transition de chauffe 91 c peut être choisi pour que les moyens de chauffe 19 soient alimentés à puissance réduite avant que la température de la préparation culinaire présente dans la cuve 5 atteigne atteigne 85°C, le seuil de température de coupure étant choisi pour que l'alimentation des moyens de chauffe 19 soit interrompue lorsque la température de la préparation culinaire a atteint une valeur comprise entre 85°C et 90°C. Le procédé et l'appareil selon l'invention permettent ainsi de réaliser de manière automatique des sauces à l'huile telles que par exemple la sauce béchamel, si désiré en utilisant des huiles réputées fragiles, et aussi dans certaines recettes de sauces au beurre, telles que par exemple sauce bordelaise ou sauce bourguigonne, de remplacer le beurre par de l'huile.

Le procédé et l'appareil selon l'invention sont ainsi particulièrement adaptés pour lier une préparation culinaire à base d'oeuf et/ou d'huile sans ébullition.

A titre de variante, le siège chauffant 20 peut comporter plusieurs moyens de chauffe 19.

A titre de variante, le fond diffuseur inférieur 40 peut présenter au moins une conformation concave 42 prévue pour loger une protubérance 23 formée sur le siège chauffant 20.

A titre de variante, le fond diffuseur inférieur 40 n'est pas nécessairement rapporté sous le fond de la cuve 5. Le fond diffuseur inférieur 40 peut notamment faire partie intégrante de la cuve 5, par exemple lorsque la cuve 5 est réalisée en aluminium.

A titre de variante, le dispositif de contrôle de température 9 ne comporte pas nécessairement un capteur de température 25 venant en contact avec un fond diffuseur inférieur 40 de la cuve 5. Si désiré, le capteur de température 25 peut venir en contact avec la cuve 5 de préférence dans la moitié inférieure de la cuve 5, par exemple contre une paroi latérale de la cuve 5. Avantageusement alors la partie de la cuve 5 en contact avec le capteur de température est réalisé en matériau bon conducteur thermique, pour que la température mesurée par le capteur de température 25 soit proche de la température de la préparation contenue dans la cuve 5.

A titre de variante, la pale 6 n'est pas nécessairement entrainée par l'intermédiaire de la cuve 5. L'organe d'entraînement supérieur 33 présentant des conformations hélicoïdales 37 pourrait notamment appartenir à la base motorisée 8, la cuve 5 présentant alors une cheminée pour le passage de la transmission.

Si désiré la pale 6 peut comporter plusieurs bras inférieurs 62. Si désiré la pale 6 peut comporter plusieurs bras supérieurs 72, ou être dépourvue de bras supérieur.

A titre de variante, la pale 6 n'est pas nécessairement entrainée par une base motorisée 8 comportant un moteur 27 disposé sous le siège chauffant 20. Si désiré, la pale 6 peut être entrainée par sa partie supérieure.

A titre de variante le dispositif de régulation de température 59 pourrait notamment comprendre en remplacement du thermostat 56 un autre capteur de température disposé de préférence à proximité des moyens de chauffe 19, pour réduire l'amplitude de température du siège chauffant 20 entre les coupures des moyens de chauffe 19 et leur réalimentation.

La présente invention n'est nullement limitée à l'exemple de réalisation décrit et à ses variantes, mais englobe de nombreuses modifications dans le cadre des revendications.

## Revendications

1. Procédé de pilotage d'un appareil électroménager de préparation culinaire mélangeur chauffant pour lier une préparation culinaire à base d'oeuf et/ou d'huile, ledit appareil électroménager de préparation culinaire mélangeur chauffant comportant une pale (6) de remuage entraînée en rotation dans une cuve (5) reposant sur un siège chauffant (20) comprenant des moyens de chauffe (19) associés à un dispositif de contrôle de température (9) venant en contact avec la cuve (5), dans une première phase de chauffe les moyens de chauffe (19) étant alimentés indépendamment de la température mesurée par le dispositif de contrôle de température (9), tant que la température mesurée par le dispositif de contrôle de température (9) reste inférieure à un premier seuil de transition de chauffe (91 a, 91 b, 91 c), **caractérisé en ce que**:
- les moyens de chauffe (19) sont réalimentés pour une deuxième phase de chauffe temporaire lorsque la température mesurée par le dispositif de contrôle de température (9) descend en dessous d'un deuxième seuil de commande de chauffe (92a, 92b, 92c),
- les moyens de chauffe (19) sont réalimentés pour une troisième phase de chauffe temporaire lorsque la température mesurée par le dispositif de contrôle de température (9) descend en dessous d'un troisième seuil de commande de chauffe (93a, 93b, 93c) supérieur au deuxième seuil de commande de chauffe (92a, 92b, 92c).

2. Procédé de pilotage selon la revendication 1, **caractérisé en ce que** le deuxième seuil de commande de chauffe (92a, 92b, 92c) est inférieur au premier seuil de transition de chauffe (91 a, 91 b, 91 c).

3. Procédé de pilotage selon l'une des revendications 1 ou 2, **caractérisé en ce que** la deuxième phase de chauffe temporaire et/ou la troisième phase de chauffe temporaire présente(nt) une durée déterminée.

4. Procédé de pilotage selon l'une des revendications 1 à 3, **caractérisé en ce que** l'alimentation des moyens de chauffe (19) est interrompue lorsque la température mesurée par le dispositif de contrôle de température (9) atteint un seuil de température de coupure supérieur au troisième seuil de commande de chauffe (93a, 93b, 93c).

5. Procédé de pilotage selon l'une des revendications 1 à 4, **caractérisé en ce que** la durée d'interruption de l'alimentation des moyens de chauffe (19) après la première phase de chauffe est supérieure à la durée d'alimentation des moyens de chauffe (19) lors de la de la deuxième phase de chauffe temporaire.

6. Procédé de pilotage selon l'une des revendications 1 à 5, **caractérisé en ce que** la durée d'interruption de l'alimentation des moyens de chauffe (19) après la deuxième phase de chauffe temporaire est supérieure à la durée d'alimentation des moyens de chauffe (19) lors de la troisième phase de chauffe temporaire.

7. Procédé de pilotage selon l'une des revendications 1 à 6, **caractérisé en ce que** la pale (6) est entrainée en rotation au moins pendant la première moitié de la durée de la première phase de chauffe.

8. Procédé de pilotage selon l'une des revendications 1 à 7, **caractérisé en ce que** la pale (6) est entrainée en rotation au moins dès la fin de la première phase de chauffe.

9. Procédé de pilotage selon l'une des revendications 1 à 8, **caractérisé en ce que** la pale (6) est entrainée en rotation pendant toute la réalisation de la préparation culinaire.

10. Procédé de pilotage selon l'une des revendications 1 à 9, **caractérisé en ce que** la pale (6) est entrainée en rotation à une ou plusieurs vitesses de rotation comprise(s) entre 40 et 150 tr/min, et de préférence comprise(s) entre 50 et 100 tr/min.

11. Procédé de pilotage selon l'une des revendications 1 à 10, **caractérisé en ce que** l'alimentation des moyens de chauffe (19) utilise un seuil de température de maintien au chaud (94c) inférieur au deuxième seuil de commande de chauffe (92a, 92b, 92c), après la troisième phase de chauffe temporaire, et **en ce que** les moyens de chauffe (19) sont réalimentés pour une périodre de maintien au chaud chaque fois que la température mesurée par le dispositif de contrôle de température (9) descend en dessous du seuil de température de maintien au chaud (94c).

12. Appareil électroménager de préparation culinaire mélangeur chauffant comportant une pale (6) de remuage entraînée en rotation dans une cuve (5) reposant sur un siège chauffant (20) comprenant des moyens de chauffe (19) associés à un dispositif de contrôle de température (9) venant en contact avec la cuve (5), **caractérisé en ce qu'**il comporte un dispositif de commande (4) comprenant au moins un programme de fonctionnement selon le procédé conforme à l'une des revendications 1 à 11.

13. Appareil électroménager de préparation culinaire mélangeur chauffant selon la revendication 12, **caractérisé en ce que** le premier seuil de transition de chauffe (91 a, 91 b, 91 c) et/ou le deuxième seuil de commande de chauffe (92a, 92b, 92c) et/ou le troisième seuil de commande de chauffe (93a, 93b, 93c) est ajustable.

14. Appareil électroménager de préparation culinaire mélangeur chauffant selon la revendication 13, **caractérisé en ce que** l'alimentation des moyens de chauffe (19) est interrompue après une durée déterminée par ledit programme de fonctionnement et **en ce que** le dispositif de commande (4) comporte des moyens de réglage de ladite durée déterminée.

15. Appareil électroménager de préparation culinaire mélangeur chauffant selon l'une des revendications 13 ou 14, **caractérisé en ce que** la cuve (5) comporte un fond diffuseur inférieur (40) reposant sur le siège chauffant (20), et **en ce que** le dispositif de contrôle de température (9) comporte un capteur de température (25) venant en contact avec le fond diffuseur inférieur (40) de la cuve (5).

## Patentansprüche

1. Verfahren zur Steuerung eines Elektrohaushaltsgeräts zur Zubereitung und zum Rühren von Speisen mit Heizfunktion zum Binden einer Speise auf Ei- und/oder Ölbasis, wobei das genannte Elektrohaushaltsgerät zur Zubereitung und zum Rühren von Speisen mit Heizfunktion eine Rührschaufel (6) umfasst, die drehend in einem Behälter (5) angetrieben wird, der sich auf einem Heizsockel (20) befindet, welcher Heizmittel (19) umfasst, die mit einer Vorrichtung zur Temperaturkontrolle (9) verbunden sind und den Behälter (5) berühren, wobei die Heizmittel (19) in einer ersten Heizphase so lange unabhängig von der durch die Vorrichtung zur Temperaturkontrolle (9) gemessenen Temperatur mit Strom versorgt werden, wie die von der Vorrichtung zur Temperaturkontrolle (9) gemessene Temperatur unter einem ersten Heiz-Schwellenwert (91 a, 91 b, 91 c) liegt, **dadurch gekennzeichnet, dass**:
- die Heizmittel (19) in einer zweiten, temporären Heizphase erneut mit Strom versorgt werden, wenn die von der Vorrichtung zur Temperaturkontrolle (9) gemessene Temperatur unter einen zweiten Schwellenwert der Heizsteuerung (92a, 92b, 92c) fällt,
- die Heizmittel (19) in einer dritten, temporären Heizphase erneut mit Strom versorgt werden, wenn die von der Vorrichtung zur Temperaturkontrolle (9) gemessene Temperatur unter einen dritten Schwellenwert der Heizsteuerung (93a, 93b, 93c) fällt, der über dem zweiten Schwellenwert der Heizsteuerung (92a, 92b, 92c) liegt.

2. Verfahren zur Steuerung nach Anspruch 1, **dadurch gekennzeichnet, dass** der zweite Schwellenwert der Heizsteuerung (92a, 92b, 92c) unter dem ersten Heiz-Schwellenwert (91 a, 91 b, 91 c) liegt.

3. Verfahren zur Steuerung nach Anspruch 1 oder 2, **dadurch gekennzeichnet, dass** die zweite, temporäre Heizphase und/oder die dritte, temporäre Heizphase eine zeitliche Begrenzung aufweist/aufweisen.

4. Verfahren zur Steuerung nach einem der Ansprüche 1 bis 3, **dadurch gekennzeichnet, dass** die Stromversorgung der Heizmittel (19) unterbrochen wird, wenn die von der Vorrichtung zur Temperaturkontrolle (9) gemessene Temperatur einen Schwellenwert der Abschalttemperatur erreicht, der über dem dritten Schwellenwert der Heizsteuerung (93a, 93b, 93c) liegt.

5. Verfahren zur Steuerung nach einem der Ansprüche 1 bis 4, **dadurch gekennzeichnet, dass** die Unterbrechungsdauer der Stromversorgung der Heizmittel (19) nach der ersten Heizphase länger als die Dauer der Stromversorgung der Heizmittel (19) während der zweiten, temporären Heizphase ist.

6. Verfahren zur Steuerung nach einem der Ansprüche 1 bis 5, **dadurch gekennzeichnet, dass** die Unterbrechungsdauer der Stromversorgung der Heizmittel (19) nach der zweiten, temporären Heizphase länger als die Dauer der Stromversorgung der Heizmittel (19) während der dritten, temporären Heizphase ist.

7. Verfahren zur Steuerung nach einem der Ansprüche 1 bis 6, **dadurch gekennzeichnet, dass** die Rührschaufel (6) zumindest während der ersten Hälfte der ersten Heizphase drehend angetrieben wird.

8. Verfahren zur Steuerung nach einem der Ansprüche 1 bis 7, **dadurch gekennzeichnet, dass** die Rührschaufel (6) zumindest ab dem Ende der ersten Heizphase drehend angetrieben wird.

9. Verfahren zur Steuerung nach einem der Ansprüche 1 bis 8, **dadurch gekennzeichnet, dass** die Rührschaufel (6) während der gesamten Speisenzubereitung drehend angetrieben wird.

10. Verfahren zur Steuerung nach einem der Ansprüche 1 bis 9, **dadurch gekennzeichnet, dass** die Rührschaufel (6) mit einer oder mehreren Drehgeschwindigkeit(en) zwischen 40 und 150 U/min und vorzugsweise zwischen 50 und 100 U/min drehend angetrieben wird.

11. Verfahren zur Steuerung nach einem der Ansprüche 1 bis 10, **dadurch gekennzeichnet, dass** die Stromversorgung der Heizmittel (19) einen Temperatur-Schwellenwert für das Warmhalten (94c) nach der dritten, temporären Heizphase nutzt, der unter dem zweiten Schwellenwert der Heizsteuerung (92a, 92b, 92c) liegt, wobei die Heizmittel (19) für eine Dauer des Warmhaltens jedes Mal erneut mit Strom versorgt werden, wenn die von der Vorrichtung zur Temperaturkontrolle (9) gemessene Temperatur unter den Temperatur-Schwellenwert für das Warmhalten (94c) fällt.

12. Elektrohaushaltsgerät zur Zubereitung und zum Rühren von Speisen mit Heizfunktion mit einer Rührschaufel (6), die drehend in einem Behälter (5) angetrieben wird, der sich auf einem Heizsockel (20) befindet, welcher Heizmittel (19) umfasst, die mit einer Vorrichtung zur Temperaturkontrolle (9) verbunden sind und den Behälter (5) berühren, **dadurch gekennzeichnet, dass** es mit einer Steuervorrichtung (4) ausgestattet ist, die mindestens ein Betriebsprogramm entsprechend dem Verfahren nach einem der Ansprüche 1 bis 11 umfasst.

13. Elektrohaushaltsgerät zur Zubereitung und zum Rühren von Speisen mit Heizfunktion nach Anspruch 12, **dadurch gekennzeichnet, dass** der erste Heiz-Schwellenwert (91 a, 91 b, 91 c) und/oder der zweite Schwellenwert der Heizsteuerung (92a, 92b, 92c) und/oder der dritte Schwellenwert der Heizsteuerung (93a, 93b, 93c) einstellbar ist/sind.

14. Elektrohaushaltsgerät zur Zubereitung und zum Rühren von Speisen mit Heizfunktion nach Anspruch 13, **dadurch gekennzeichnet, dass** die Stromversorgung der Heizmittel (19) nach einem bestimmten Zeitraum durch das genannte Betriebsprogramm unterbrochen wird und die Steuervorrichtung (4) Einstellmittel zur Festlegung des genannten Zeitraums umfasst.

15. Elektrohaushaltsgerät zur Zubereitung und zum Rühren von Speisen mit Heizfunktion nach Anspruch 13 oder 14, **dadurch gekennzeichnet, dass** der Behälter (5) einen unteren Diffusorboden (40) umfasst, der auf dem Heizsockel (20) aufliegt, und die Vorrichtung zur Temperaturkontrolle (9) einen Temperatursensor (25) umfasst, der den unteren Diffusorboden (40) des Behälters (5) berührt.

## Claims

1. Method for controlling a food preparation household electrical heating mixing appliance to bind a food preparation based on egg and/or oil, said food preparation household electrical heating mixing appliance having a mixing blade (6) rotated in a container (5) resting on a heating base (20) comprising heating means (19) connected to a temperature control device (9) in contact with the container (5), in a first heating phase the heating means (19) being powered independently of the temperature measured by the temperature control device (9), as long as the temperature measured by the temperature control device (9) remains less than a first heating transition threshold (91 a, 91 b, 91 c), **characterised in that**:
- the power supply of the heating means (19) is switched on again for a second temporary heating phase when the temperature measured by the temperature control device (9) falls below a second heating control threshold (92a, 92b, 92c),
- the power supply of the heating means (19) is switched on again for a third temporary heating phase when the temperature measured by the temperature control device (9) falls below a third heating control threshold (93a, 93b, 93c) greater than the second heating control threshold (92a, 92b, 92c).

2. Control method according to Claim 1, **characterised in that** the second heating control threshold (92a, 92b, 92c) is less than the first heating transition threshold (91 a, 91 b, 91 c).

3. Control method according to Claim 1 or 2, **characterised in that** the second temporary heating phase and/or the third temporary heating phase has/have a fixed duration.

4. Control method according to one of Claims 1 to 3, **characterised in that** the power supply of the heating means (19) is switched off when the temperature measured by the temperature control device (9) reaches a cut-off temperature threshold greater than the third heating control threshold (93a, 93b, 93c).

5. Control method according to one of Claims 1 to 4, **characterised in that** the time during which the power supply of the heating means (19) is switched off after the first heating phase is greater than the time during which the power supply of the heating means (19) is switched on during the second temporary heating phase.

6. Control method according to one of Claims 1 to 5, **characterised in that** the time during which the power supply of the heating means (19) is switched off after the second temporary heating phase is greater than the time during which the power supply of the heating means (19) is switched on during the third temporary heating phase.

7. Control method according to one of Claims 1 to 6, **characterised in that** the blade (6) is rotated at least during the first half of the first heating phase.

8. Control method according to one of Claims 1 to 7, **characterised in that** the blade (6) is rotated at least from the end of the first heating phase.

9. Control method according to one of Claims 1 to 8, **characterised in that** the blade (6) is rotated throughout the entire food preparation period.

10. Control method according to one of Claims 1 to 9, **characterised in that** the blade (6) is rotated at one or more rotation speeds between 40 and 150 rpm and preferably between 50 and 100 rpm.

11. Control method according to one of Claims 1 to 10, **characterised in that** the power supply of the heating means (19) uses a keep-hot temperature threshold (94c) less than the second heating control threshold (92a, 92b, 92c) after the third temporary heating phase, and **in that** the power supply of the heating means (19) is switched on again for a keep-hot period whenever the temperature measured by the temperature control device (9) falls below the keep-hot temperature threshold (94c).

12. Food preparation household electrical heating mixing appliance having a mixing blade (6) rotated in a container (5) resting on a heating base (20) comprising heating means (19) connected to a temperature control device (9) in contact with the container (5), **characterised in that** it has a control device (4) comprising at least one operating programme according to the method described in one of Claims 1 to 11.

13. Food preparation household electrical heating mixing appliance according to Claim 12, **characterised in that** the first heating transition threshold (91 a, 91 b, 91 c) and/or the second heating control threshold (92a, 92b, 92c) and/or the third heating control threshold (93a, 93b, 93c) is/are adjustable.

14. Food preparation household electrical heating mixing appliance according to Claim 13, **characterised in that** the power supply of the heating means (19) is switched off after a fixed duration determined by said operating programme and **in that** the control device (4) has means for adjusting said fixed duration.

15. Food preparation household electrical heating mixing appliance according to Claim 13 or 14, **characterised in that** the container (5) has a lower diffusing bottom (40) resting on the heating base (20), and **in that** the temperature control device (9) has a temperature sensor (25) in contact with the lower diffusing bottom (40) of the container (5).
